# FASCICULE DE BREVET EUROPEEN

(11) **EP 3 920 105 B1**
(45) Date de publication et mention de la délivrance du brevet: **20.11.2024**
(21) Numéro de dépôt: 20305576.9
(22) Date de dépôt: 02.06.2020
(51) Int. Cl.: G06N 3/08, G06N 3/04

(54) **PROCÉDÉ D'APPRENTISSAGE D'UN RÉSEAU DE NEURONES ET PROGRAMME D'ORDINATEUR METTANT EN OEUVRE UN TEL PROCÉDÉ**
LERNVERFAHREN EINE NEURONALEN NETZES UND COMPUTERPROGRAMM ZUR UMSETZUNG DIESES VERFAHRENS
LEARNING METHOD FOR A NEURAL NETWORK AND COMPUTER PROGRAM IMPLEMENTING SUCH A METHOD

(43) Date de publication de la demande: 08.12.2021
(73) Titulaire: Bull SAS, 78340 Les Clayes-sous-Bois (FR)
(72) Inventeur: LAUGROS, Alfred, 38000 Grenoble (FR)
(74) Mandataire: IPAZ

(56) Documents cités:
- HONGYI ZHANG ET AL: "mixup: Beyond Empirical Risk Minimization", 27 April 2018 (2018-04-27), XP055716970, Retrieved from the Internet <URL:https://arxiv.org/pdf/1710.09412.pdf> [retrieved on 20200721]

## Description

La présente invention concerne un procédé d'apprentissage d'un réseau de neurones utilisé pour le traitement d'images. Elle concerne également un programme d'ordinateur configuré pour mettre une oeuvre un tel procédé.

Le domaine de l'invention est le domaine des réseaux de neurones utilisés pour le traitement d'images.

### État de la technique

De nos jours, les réseaux de neurones sont largement utilisés dans le domaine du traitement automatisé d'images, principalement pour la classification automatisée des images, ou pour la reconnaissance automatisée d'objets dans les images. Pour ce faire, un réseau de neurones est d'abord entrainé, lors d'une phase d'apprentissage, sur une base d'images, appelée base d'apprentissage, puis sa performance est testée sur une base d'images, dite base de test : ce dernier pouvant être partiellement ou totalement différente de la base d'apprentissage.

Cependant, il arrive qu'une image prévue pour être traitée par un réseau de neurones comporte une modification, parfois à peine visible, appelée « attaque adversaire », introduite dans ladite image de manière volontaire dans le but de perturber le réseau de neurones. Lorsqu'une attaque adversaire a pour objectif d'orienter la réponse du réseau de neurones vers une cible donnée, alors elle est appelée « attaque adversaire ciblée ».

La robustesse d'un réseau de neurones contre les attaques adversaires est mesurée en comparant la performance de ce réseau de neurones obtenue sur des images ne comportant pas d'attaque adversaire, dite images non-adversaires, à la performance dudit réseau de neurones obtenue sur ces mêmes images dans lesquelles une attaque adversaire a préalablement été introduite, ces images étant appelées « images adversaires ».

La solution traditionnellement utilisée pour améliorer la robustesse d'un réseau de neurones aux attaques adversaires est d'utiliser une base d'apprentissage comprenant des images comportant des attaques adversaires : un tel apprentissage est appelé « apprentissage adversaire ». Or, l'apprentissage adversaire présente l'inconvénient de dégrader la performance du réseau de neurones sur des images non-adversaires.

Un but de la présente invention est de remédier à cet inconvénient.

Un autre but de la présente invention est de proposer un procédé d'apprentissage d'un réseau de neurones utilisé pour le traitement d'images permettant d'améliorer la robustesse dudit réseau de neurones contre les attaques adversaires tout en évitant, ou du moins limitant, la dégradation de la performance dudit réseau de neurones sur des images non-adversaires.

Hongyi Zhang ET AL: "mixup: Beyond Empirical Risk Minimization", divulgue une méthode d'apprentissage adversaire d'un classificateur d'images.

### Exposé de l'invention

L'invention permet d'atteindre au moins l'un de ces buts par un procédé selon la revendication 1.

Dans le présent document, par « image », on entend une image digitale ou une image numérique, et en particulier des données numériques représentant une image.

Par « attaque adversaire », on désigne une modification, parfois à peine visible, introduite dans une image dans le but de perturber un réseau de neurones qui traite cette image.

Par « attaque adversaire ciblée », on désigne une attaque adversaire dont le but est d'orienter la réponse du réseau de neurones vers une cible. Par exemple une attaque adversaire ciblant « arbre », est conçue pour faire croire au réseau de neurone que l'image traitée est un arbre.

Par « image adversaire », on entend une image comportant une attaque adversaire.

Par « image non-adversaire », on entend une image ne comportant pas d'attaque adversaire.

Par « apprentissage adversaire », on entend un apprentissage d'un réseau de neurones utilisant une base d'images comprenant des images adversaires et, éventuellement des images non adversaires.

Par « étape d'apprentissage adversaire », on entend une étape d'apprentissage utilisant une image adversaire.

Par « étape d'apprentissage non-adversaire », on entend une étape d'apprentissage utilisant une image non-adversaire.

Pour au moins une image adversaire, la donnée de résultat et la donnée de cible peuvent être mémorisées ensemble dans une même donnée, dite label adversaire, indiquée audit réseau de neurones lors de l'étape d'apprentissage adversaire utilisant ladite image adversaire.

Dans ce cas, la fourniture de la donnée de résultat et de la donnée de cible est réalisée simultanément en une seule opération. En effet, la donnée de résultat et la donnée de cible sont indiquées au réseau de neurones simultanément, en une seule opération, indiquant au réseau de neurones le label adversaire qui comprend les deux données.

Alternativement, pour au moins une image adversaire, la donnée de résultat et la donnée de cible peuvent être mémorisées individuellement. Dans ce cas, la donnée de résultat et la donnée de cible peuvent être indiquées au réseau de neurones simultanément, ou à tour de rôle.

Le procédé selon l'invention peut en outre comprendre au moins une étape d'apprentissage qui fournit en entrée du réseau de neurones, une image, dite non-adversaire, ne comportant pas d'attaque adversaire.

Une telle étape d'apprentissage peut être appelée, étape d'apprentissage non-adversaire.

Une telle étape d'apprentissage ne fournit pas de donnée de cible au réseau de neurones puisque l'image non-adversaire ne comprend pas d'attaque adversaire.

En particulier, une telle étape d'apprentissage non-adversaire fournit au réseau de neurones uniquement une donnée de résultat associée à l'image non-adversaire fournie au réseau de neurones lors de ladite étape d'apprentissage.

Pour au moins une image non-adversaire, la donnée de résultat peut être appelée label non-adversaire.

Suivant un autre aspect de la présente invention, il est proposé une base d'images selon la revendication 4.

La base d'apprentissage selon l'invention permet de réaliser un apprentissage d'un réseau de neurones, utilisé pour le traitement d'images, permettant d'améliorer la robustesse dudit réseau de neurones contre les attaques adversaires tout en évitant, du moins limitant, la dégradation de la performance dudit réseau de neurones sur des images non adversaires.

Suivant un mode de réalisation, la base d'apprentissage selon l'invention peut comprendre uniquement des images adversaires.

Suivant un autre mode de réalisation, la base d'apprentissage selon l'invention peut comprendre :
- au moins une image, dite non-adversaire, ne comportant pas d'attaque adversaire ; et
- pour au moins une, en particulier chaque, image non-adversaire, une première donnée, dite donnée de résultat, mémorisée en association avec ladite image non-adversaire et prévue pour indiquer audit réseau de neurones, le résultat attendu pour ladite image non-adversaire.

Une telle base permet de réaliser un meilleur apprentissage du réseau de neurones, et de conserver une meilleure performance sur des images non adversaires lors de l'utilisation du réseau de neurones.

Deux images adversaires peuvent comprendre la même attaque adversaire, c'est-à-dire la même modification ciblée visant à orienter le réseau de neurones vers un même résultat erroné, ou une même cible, pour chacune des dites images.

Dans ce cas, ces deux images adversaires peuvent avoir le même contenu, c'est-à-dire la même donnée de résultat, ou des données de résultat différentes.

Alternativement, ou en plus, deux images adversaires peuvent comprendre des attaques adversaires différentes, c'est-à-dire des modifications ciblées différentes visant à orienter le réseau de neurones vers des résultats erronés différents, ou des cibles différentes.

Dans ce cas, ces deux images adversaires peuvent avoir le même contenu, c'est-à-dire la même donnée de résultat, ou des données de résultat différentes.

Suivant un autre aspect de la présente invention, il est proposé un programme d'ordinateur comprenant des instructions, qui lorsqu'elles sont exécutées par un appareil électronique et/ou informatique, mettent en oeuvre le procédé d'apprentissage selon l'invention.

Le programme d'ordinateur peut être codé avec tout type de langage informatique, tel que par exemple en C, C++, JAVA, Python, etc.

Le programme d'ordinateur peut être mémorisé dans un appareil informatique ou électronique.

Alternativement, le programme d'ordinateur peut être mémorisé sur un support lisible par un appareil informatique ou électronique, tel qu'une carte mémoire ou une clef USB par exemple. Dans ce cas, l'invention porte également sur le support mémorisant ledit programme informatique.

Suivant un autre aspect de la présente invention, qui n'est pas couvert par les revendications, il est proposé un réseau de neurones entrainé par le procédé d'apprentissage selon l'invention.

Le réseau de neurones peut être tout type de réseau de neurones qu'il est possible d'utiliser pour traitement d'images et qu'il est possible d'entrainer de manière supervisée.

En particulier, le réseau de neurones peut être un réseau de neurones à propagation avant (« feed forward » en anglais), par exemple à perceptron simple ou à perceptron multicouche, un réseau de neurones récurrent, un réseau de neurones a résonnance, etc.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'une étape d'apprentissage adversaire pouvant être mise en oeuvre dans un procédé selon l'invention ;
- la FIGURE 2 est une représentation schématique d'un exemple de réalisation non limitatif d'une étape d'apprentissage non-adversaire pouvant être mise en oeuvre dans un procédé selon l'invention ; et
- la FIGURE 3 est une représentation schématique d'un exemple de réalisation non limitatif d'un procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

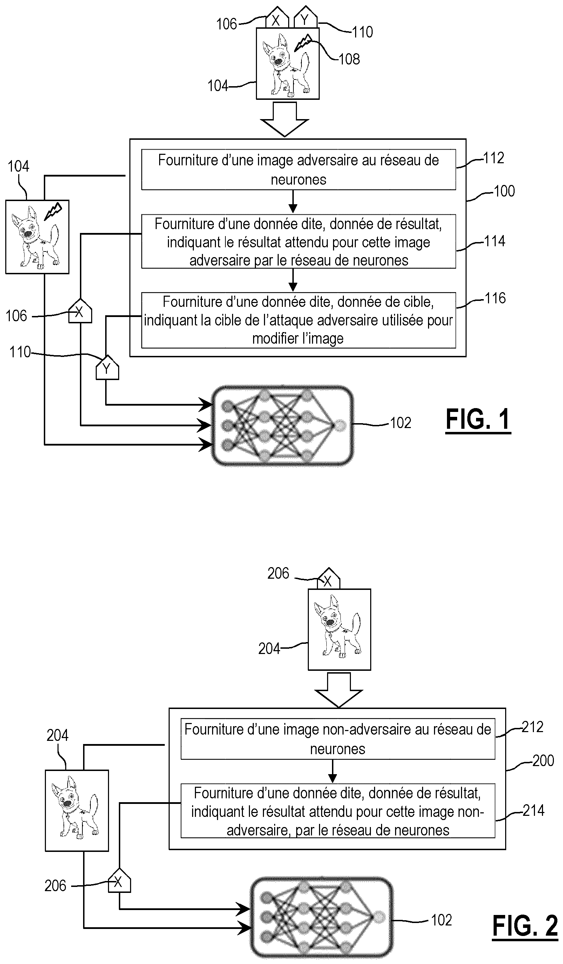

La FIGURE 1 est une représentation schématique d'un exemple de réalisation non limitatif d'une étape d'apprentissage adversaire pouvant être mise en oeuvre dans un procédé selon l'invention.

L'étape d'apprentissage 100, représentée sur la FIGURE 1, permet d'entrainer un réseau de neurones 102 avec une image adversaire 104.

Le réseau de neurones 102 peut être n'importe quel type de réseau de neurones pouvant être utilisé pour le traitement d'images et pouvant être entrainé par un apprentissage supervisé.

L'image adversaire 104 peut être n'importe quelle type d'image. Elle comprend un contenu, qui dans l'exemple présent est un chien. Bien entendu, le contenu peut être tout autre. Le contenu de l'image adversaire 104 peut représenter un objet, ou tout autre chose telle qu'une couleur ou une forme. Le contenu est indiqué par une donnée 106, dite donnée de contenu, mémorisée en association avec l'image adversaire 104. Dans l'exemple représenté, la donnée de contenu 106 indique par exemple « chien » car l'image adversaire 104 représente un chien.

De plus, l'image adversaire 104 comporte une modification 108, appelée attaque adversaire, visible ou non à l'œil. Cette attaque adversaire 108 peut être une modification de toute nature : modification d'une couleur de l'image, suppression d'une partie l'image, ajout d'une information dans l'image, etc. Cette attaque adversaire 108 a pour but de perturber le réseau de neurones 102 et d'orienter la réponse du réseau de neurones 102 vers une cible donnée, qui n'est pas le résultat attendu pour cette image. Par exemple, cette attaque adversaire 108 a pour but d'orienter la réponse du réseau de neurones 102 vers « arbre » alors que le contenu de l'image adversaire 104 est un chien.

De plus, selon l'invention, une donnée 110, dite donnée de cible, est mémorisée en association avec l'image adversaire 104 pour indiquer la cible vers laquelle l'attaque adversaire 108 a pour but d'orienter le réseau de neurones 102. Autrement dit, cette donnée de cible 110 permet d'indiquer au réseau neurones 102 un résultat erroné que le réseau de neurones ne doit pas retourner lorsqu'il reçoit en entrée l'image adversaire 104.

L'étape d'apprentissage adversaire supervisé 100 de la FIGURE 1 comprend une opération 112 de fourniture de l'image adversaire 104 en entrée du réseau de neurones 102.

De plus, l'étape d'apprentissage adversaire supervisé 100 comprend en outre une opération 114 de fourniture, audit réseau de neurones 102, de la donnée de résultat indiquant le résultat attendu pour ladite image adversaire 104.

Enfin, l'étape d'apprentissage adversaire supervisé 100 comprend une opération 116 de fourniture, audit réseau de neurones 102, de la donnée de cible 110 indiquant, au réseau de neurones 102, la cible de l'attaque adversaire utilisée pour modifier l'image 104.

Les opérations 112-116 peuvent être réalisées à tour de rôle ou simultanément. En effet, l'image adversaire 104, la donnée de résultat 106 et la donnée de cible 110 peuvent être fournie en entré du réseau de neurones 102, simultanément, par exemple en tant que paramètres d'entrée.

En particulier, les opérations 114-116 de fourniture des données de résultat 106 et de cible 110 peuvent être réalisées simultanément. Dans ce cas, suivant un mode de réalisation, la donnée de résultat 106 et la donnée de cible 110 peuvent être mémorisées individuellement, par exemple respectivement en tant que label résultat et label cible. Alternativement, la donnée de résultat 106 et la donnée de cible 110 peuvent être mémorisées ensemble, par exemple dans une unique étiquette, ou label.

La FIGURE 2 est une représentation schématique d'un exemple de réalisation non limitatif d'une étape d'apprentissage non-adversaire pouvant être mise en oeuvre dans un procédé selon l'invention.

L'étape d'apprentissage 200, représentée sur la FIGURE 2, permet d'entrainer le réseau de neurones 102 avec une image non-adversaire 204.

L'image non-adversaire 204 peut être n'importe quelle type d'image. Elle comprend un contenu, qui dans l'exemple présent est un chien. Bien entendu, le contenu de l'image non-adversaire 204 peut représenter un objet, ou tout autre chose telle qu'une couleur ou une forme. Le contenu est indiqué par une donnée 206, dite donnée de contenu, mémorisée en association avec l'image non-adversaire 204. Dans l'exemple représenté, la donnée de contenu 206 indique par exemple « chien » car l'image adversaire 104 représente un chien.

En particulier, dans l'exemple représenté l'image non-adversaire 204 correspond à l'image adversaire 104 de la FIGURE 1, sans l'attaque adversaire 108. Bien entendu, cet exemple n'est nullement limitatif et le contenu de l'image non-adversaire peut être différent du contenu de l'image adversaire.

L'étape d'apprentissage non-adversaire supervisé 200 de la FIGURE 2 comprend une opération 212 de fourniture de l'image non-adversaire 204 en entrée du réseau de neurones 102.

De plus, l'étape d'apprentissage non-adversaire supervisé 200 comprend en outre une opération 214 de fourniture, audit réseau de neurones 102, de la donnée de résultat indiquant le résultat attendu pour ladite image non-adversaire 104.

Les opérations 212-214 peuvent être réalisées à tour de rôle ou simultanément. En effet, l'image non-adversaire 204 et la donnée de résultat 206 peuvent être fournie en entrée du réseau de neurones 102, simultanément, par exemple en tant que paramètres d'entrée.

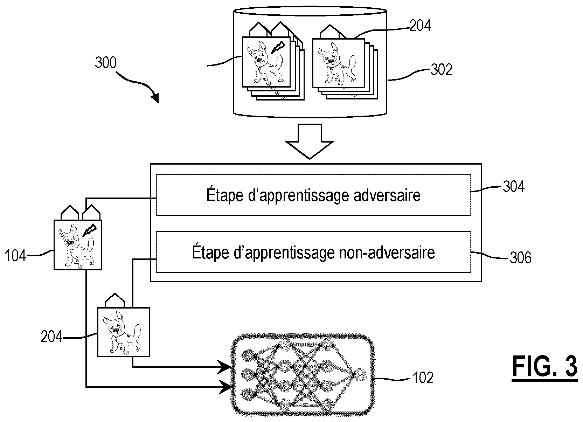

La FIGURE 3 est une représentation schématique d'un exemple de réalisation non limitatif d'un procédé d'apprentissage selon l'invention.

Le procédé 300 de la FIGURE 3 est utilisé pour entrainer un réseau de neurones de manière supervisée, tel que par exemple le réseau de neurones 102 des FIGURES 1 et 2

Pour ce faire, le procédé utilise une base d'images 302 selon l'invention comprenant des images adversaires, et éventuellement des images non-adversaires.

Dans l'exemple représenté, la base d'images 302 comprend des images adversaires, telle que par exemple l'image adversaire 104 de la FIGURE 1, et des images non-adversaires, telle que par exemple l'image non-adversaire 204 de la FIGURE 2.

Le procédé 300 comprend une ou plusieurs itérations d'une étape d'apprentissage adversaire 304, chaque itération étant réalisée avec une image adversaire mémorisée dans la base d'images 302.

L'étape d'apprentissage adversaire 304 peut correspondre à l'étape d'apprentissage adversaire 100 de la FIGURE 1.

Le procédé 300 comprend en outre une ou plusieurs itérations d'une étape d'apprentissage non-adversaire 306, chaque itération étant réalisée avec une image non-adversaire mémorisée dans la base d'images 302.

L'étape d'apprentissage non-adversaire 306 peut correspondre à l'étape d'apprentissage non-adversaire 200 de la FIGURE 2.

La ou les itération(s) de l'étape d'apprentissage adversaire 304 et la ou les itération(s) de l'étape d'apprentissage non-adversaire 306 peuvent être réalisée dans n'importe quel ordre, par exemple de manière alternée, ou à tour de rôle, etc. Alternativement, toutes les itérations de l'étape d'apprentissage adversaire 304 peuvent être réalisées avant les itération(s) de l'étape d'apprentissage non-adversaire 306.

De manière générale, les itérations de l'étape d'apprentissage adversaire 304 et de l'étape d'apprentissage non-adversaire 306 peuvent être réalisées et enchaînées suivant tout autre schéma que ceux indiqués.

Le nombre d'itération(s) de l'étape d'apprentissage adversaire 304 peut être identique, ou différent, du nombre d'itération(s) de l'étape d'apprentissage non-adversaire 306.

Bien entendu, l'invention n'est pas limitée aux exemples détaillés ci-dessus.

En particulier, les images utilisées ne sont pas limitées aux exemples décrits.

Suivant des alternatives non représentées, le procédé selon l'invention peut ne pas comprendre d'étape d'apprentissage non-adversaire.

Suivant des alternatives non représentées, la base selon l'invention peut ne pas comprendre d'image non-adversaire.

## Revendications

1. Procédé (300) d'apprentissage adversaire supervisé d'un réseau de neurones (102), comprenant au moins une itération d'une étape (100;304) d'apprentissage, dite adversaire, comprenant les opérations suivantes :
- fourniture, audit réseau de neurones (102) d'une image (104), dite adversaire, comportant une modification (108), dite attaque adversaire, prévue pour orienter ledit réseau de neurones (102) vers un résultat d'une classification de l'image ou d'une reconnaissance d'objets dans l'image, le résultat étant dit cible, différent d'un résultat attendu, et correspondant à la réponse vers laquelle l'attaque adversaire a pour objectif d'orienter le réseau de neurones ; et
- fourniture, audit réseau de neurones (102), d'une première donnée, dite donnée de résultat, indiquant le résultat attendu pour ladite image adversaire (104), ledit résultat attendu correspondant à la réponse souhaitée associée à cette image adversaire ;
**caractérisé en ce que** ladite étape (100;304) d'apprentissage adversaire comprend en outre une fourniture, audit réseau de neurones (102), d'une deuxième donnée associée à ladite image (104), dite donnée de cible, indiquant audit réseau de neurones (102) ladite cible, la cible formant un résultat erroné d'une classification de l'image ou d'une reconnaissance d'objets dans l'image que le réseau de neurones (102) ne doit pas retourner lorsqu'il reçoit en entrée ladite image adversaire (104).

2. Procédé (300) selon la revendication précédente, **caractérisé en ce que**, pour au moins une image adversaire (104), la donnée de résultat et la donnée de cible sont mémorisées ensemble dans une même donnée, dite label adversaire, fournie audit réseau de neurones (102) lors de l'étape d'apprentissage adversaire (100;304) utilisant ladite image adversaire (104).

3. Procédé (300) selon l'une quelconque des revendications précédentes, **caractérisé en ce qu'**il comprend en outre au moins une étape (200;306) d'apprentissage qui fournit, en entrée du réseau de neurones (102), une image, dite non-adversaire, ne comportant pas d'attaque adversaire.

4. Base d'images (302), stockée sur des moyens de stockage, prévue pour être utilisée dans un procédé d'apprentissage adversaire supervisé d'un réseau de neurones, comprenant :
- au moins une image (104), dite adversaire, comportant une modification (108), dite attaque adversaire, prévue pour orienter ledit réseau de neurones (102) vers un résultat d'une classification de l'image ou d'une reconnaissance d'objets dans l'image, le résultat étant dit cible, différent d'un résultat attendu, et correspondant à la réponse vers laquelle l'attaque adversaire a pour objectif d'orienter le réseau de neurones ; et
- pour au moins une image adversaire (104), une première donnée, dite donnée de résultat, mémorisée en association avec ladite image adversaire (104), prévue pour être fournie audit réseau de neurones (102) et indiquer audit réseau de neurones (102) le résultat attendu pour ladite image adversaire (104), ledit résultat attendu correspondant à la réponse souhaitée associée à cette image adversaire ;
**caractérisée en ce qu'**elle comprend, pour au moins une image adversaire (104), une deuxième donnée, dite donnée de cible, mémorisée en association avec ladite image adversaire (104), prévue pour être fournie audit réseau de neurones (102) et indiquer audit réseau de neurones (102) ladite cible, la cible formant un résultat erroné d'une classification de l'image ou d'une reconnaissance d'objets dans l'image que le réseau de neurones (102) ne doit pas retourner lorsqu'il reçoit en entrée ladite image adversaire (104).

5. Base selon la revendication précédente, **caractérisée** en qu'elle comprend uniquement des images adversaires.

6. Base (302) selon la revendication 4, **caractérisée** en qu'elle comprend en outre :
- au moins une image (204), dite non-adversaire, ne comportant pas d'attaque adversaire ; et
- pour au moins une image non-adversaire (204), une première donnée, dite donnée de résultat, mémorisée en association avec ladite image non-adversaire (204) et prévue pour indiquer audit réseau de neurones (102), le résultat attendu pour ladite image non-adversaire (204).

7. Base (302) selon l'une quelconque des revendications 4 à 6, **caractérisée** en que deux images adversaires comprennent la même attaque adversaire, ou deux attaques adversaires différentes.

8. Programme d'ordinateur comprenant des instructions, qui lorsqu'elles sont exécutées par un appareil électronique et/ou informatique, mettent en oeuvre le procédé d'apprentissage (300) selon l'une quelconque des revendications 1 à 3.

## Patentansprüche

1. Verfahren (300) für ein überwachtes gegnerisches Lernen eines neuronalen Netzwerks (102), umfassend mindestens eine Iteration eines als gegnerisch bezeichneten Lernschritts (100; 304), umfassend die folgenden Operationen:
- Bereitstellen eines als gegnerisch bezeichneten Bildes (104), an das neuronale Netzwerk (102), aufweisend eine als gegnerischer Angriff bezeichnete Modifikation (108), die dafür vorgesehen ist, das neuronale Netzwerk (102) auf ein Ergebnis einer Klassifizierung des Bildes oder einer Erkennung von Objekten in dem Bild auszurichten, wobei das Ergebnis als Ziel bezeichnet wird, das sich von einem erwarteten Ergebnis unterscheidet, und die der Reaktion entspricht, auf die der gegnerische Angriff das neuronale Netzwerk ausrichten soll; und
- Bereitstellen von ersten Daten, die als Ergebnisdaten bezeichnet werden, an das neuronale Netzwerk (102), die das erwartete Ergebnis für das gegnerische Bild (104) angeben, wobei das erwartete Ergebnis der mit diesem gegnerischen Bild verbundenen gewünschten Reaktion entspricht;
**dadurch gekennzeichnet, dass** der gegnerische Lernschritt (100; 304) ferner ein Bereitstellen von zweiten Daten, die mit dem Bild (104) verbunden sind und als Zieldaten bezeichnet werden, an das neuronale Netzwerk (102) umfasst, die dem neuronalen Netzwerk (102) das Ziel angeben, wobei das Ziel ein fehlerhaftes Ergebnis einer Klassifizierung des Bildes oder einer Erkennung von Objekten in dem Bild ausbildet, das das neuronale Netzwerk (102) nicht ausgeben darf, wenn es das gegnerische Bild (104) als Eingabe empfängt.

2. Verfahren (300) nach dem vorstehenden Anspruch,
**dadurch gekennzeichnet, dass** für mindestens ein gegnerisches Bild (104) die Ergebnisdaten und die Zieldaten zusammen in gleichen als gegnerische Bezeichnung bezeichneten Daten gespeichert werden, die dem neuronalen Netzwerk (102) während des gegnerischen Lernschritts (100; 304) unter Verwendung des gegnerischen Bildes (104) bereitgestellt werden.

3. Verfahren (300) nach einem der vorstehenden Ansprüche,
**dadurch gekennzeichnet, dass** es ferner mindestens einen Lernschritt (200; 306) umfasst, der bei Eingabe für das neuronale Netzwerk (102) ein als nicht gegnerisch bezeichnetes Bild bereitstellt, das keinen gegnerischen Angriff aufweist.

4. Bilderdatenbank (302), die auf Speichermitteln gespeichert ist, die zur Verwendung in einem überwachten gegnerischen Lernverfahren eines neuronalen Netzwerks vorgesehen ist, umfassend:
- mindestens ein als gegnerisch bezeichnetes Bild (104), aufweisend eine als gegnerischer Angriff bezeichnete Modifikation (108), die dafür vorgesehen ist, das neuronale Netzwerk (102) auf ein Ergebnis einer Klassifizierung des Bildes oder einer Erkennung von Objekten in dem Bild auszurichten, wobei das Ergebnis als Ziel bezeichnet wird, das sich von einem erwarteten Ergebnis unterscheidet, und die der Reaktion entspricht, auf die der gegnerische Angriff das neuronale Netzwerk ausrichten soll; und
- für mindestens ein gegnerisches Bild (104), erste Daten, die als Ergebnisdaten bezeichnet werden, die in Verbindung mit dem gegnerischen Bild (104) gespeichert werden, die dafür vorgesehen sind, dem neuronalen Netzwerk (102) bereitgestellt zu werden und dem neuronalen Netzwerk (102) das erwartete Ergebnis für das gegnerische Bild (104) angeben, wobei das erwartete Ergebnis der gewünschten Reaktion entspricht, die mit diesem gegnerischen Bild verbunden ist;
**dadurch gekennzeichnet, dass** es, für mindestens ein gegnerisches Bild (104), zweite Daten umfasst, die als Zieldaten bezeichnet werden, die in Verbindung mit dem gegnerischen Bild (104) gespeichert werden, die dafür vorgesehen sind, dem neuronalen Netzwerk (102) bereitgestellt zu werden und dem neuronalen Netzwerk (102) das Ziel angeben, wobei das Ziel ein fehlerhaftes Ergebnis einer Klassifizierung des Bildes oder einer Erkennung von Objekten in dem Bild, die das neuronale Netzwerk (102) nicht ausgeben darf, wenn es das gegnerische Bild (104) als Eingabe empfängt.

5. Datenbank nach dem vorstehenden Anspruch,
**dadurch gekennzeichnet, dass** sie nur gegnerische Bilder umfasst.

6. Datenbank (302) nach Anspruch 4, **dadurch gekennzeichnet, dass** sie ferner umfasst:
- mindestens ein als nicht gegnerisch bezeichnetes Bild (204), das keinen gegnerischen Angriff aufweist; und
- für mindestens ein nicht gegnerisches Bild (204), erste Daten, die als Ergebnisdaten bezeichnet werden, die in Verbindung mit dem nicht gegnerischen Bild (204) gespeichert werden und dafür vorgesehen sind, dem neuronalen Netzwerk (102) das erwartete Ergebnis für das nicht gegnerische Bild (204) anzugeben.

7. Datenbank (302) nach einem der Ansprüche 4 bis 6,
**dadurch gekennzeichnet, dass** zwei gegnerische Bilder den gleichen gegnerischen Angriff oder zwei verschiedene gegnerische Angriffe umfassen.

8. Computerprogramm, umfassend Anweisungen, die, wenn sie durch eine elektronische Vorrichtung und/oder Computervorrichtung ausgeführt werden, das Lernverfahren (300) nach einem der Ansprüche 1 bis 3 implementieren.

## Claims

1. A supervised adversarial learning method (300) for a neural network (102), comprising at least one iteration of a learning step (100;304), called adversarial learning step, comprising the following operations:
- supplying, to said neural network (102), an image (104), called adversarial image, containing a modification (108), called adversarial attack, provided to orient said neural network (102) towards a result of a classification of the image or a recognition of objects in the image, the result being called target, different from an expected result, and corresponding to the response towards which the adversarial attack is intended to orient the neural network and
- supplying, to said neural network (102), a first data item, called result data item, indicating the expected result for said adversarial image (104), said expected result corresponding to the desired response associated with this adversarial image;
**characterized in that** said step (100;304) of adversarial learning also comprises supplying, to said neural network (102), a second data item associated with said image (104), called target data item, indicating said target to said neural network (102), the target forming an incorrect result of a classification of the image or a recognition of objects in the image that the neural network (102) should not return when it receives said adversarial image (104) as input.

2. The method (300) according to the preceding claim, **characterized in that**, for at least one adversarial image (104), the result data item and the target data item are stored together in one and the same data item, called adversarial label, supplied to said neural network (102) during the adversarial learning step (100;304) utilizing said adversarial image (104).

3. The method (300) according to any one of the preceding claims, **characterized in that** it also comprises at least one learning step (200;306) that supplies as input of the neural network (102) an image, called non-adversarial image, not containing an adversarial attack.

4. A set of images (302), stored on a storage medium, provided to be utilized in a supervised adversarial learning method of a neural network, comprising:
- at least one image (104), called adversarial image, containing a modification (108), called adversarial attack, provided to orient said neural network (102) towards a result of a classification of the image or a recognition of objects in the image, the result being called target, different from an expected result, and corresponding to the response towards which the adversarial attack is intended to orient the neural network; and
- for at least one adversarial image (104), a first data item, called result data item, stored in association with said adversarial image (104), provided to be supplied to said neural network (102) and indicate to said neural network (102) the expected result for said adversarial image (104), said expected result corresponding to the desired response associated with this adversarial image;
**characterized in that** it comprises, for at least one adversarial image (104), a second data item, called target data item, stored in association with said adversarial image (104), provided to be supplied to said neural network (102) and indicate said target to said neural network (102), the target forming an incorrect result of a classification of the image or a recognition of objects in the image that the neural network (102) should not return when it receives said adversarial image (104) as input.

5. The set according to the preceding claim, **characterized in that** it comprises only adversarial images.

6. The set (302) according to claim 4, **characterized in that** it also comprises:
- at least one image (204), called non-adversarial image, not containing an adversarial attack; and
- for at least one non-adversarial image (204), a first data item, called result data item, stored in association with said non-adversarial image (204), and provided to indicate to said neural network (102) the expected result for said non-adversarial image (204).

7. The set (302) according to any one of claims 4 to 6, **characterized in that** two adversarial images comprise the same adversarial attack, or two different adversarial attacks.

8. A computer program comprising instructions, which when they are executed by an electronic and/or computerized appliance, implement the learning method (300) according to any one of claims 1 to 3.
